# EUROPEAN PATENT SPECIFICATION

(11) **EP 3 345 289 B1**
(45) Date of publication and mention of the grant of the patent: **13.03.2024**
(21) Application number: 15759448.2
(22) Date of filing: 04.09.2015
(51) Int. Cl.: H02K 29/08

(54) **AUTOMOTIVE AUXILIARY DEVICE WITH ELECTRIC DRIVE MOTOR**
HILFSVORRICHTUNG MIT ELEKTRISCHEM ANTRIEBSMOTOR FÜR FAHRZEUG
DISPOSITIF AUXILIAIRE D'AUTOMOBILE À MOTEUR D'ENTRAÎNEMENT ÉLECTRIQUE

(43) Date of publication of application: 11.07.2018
(73) Proprietor: Pierburg Pump Technology GmbH, 41460 Neuss (DE)
(72) Inventor: SCHRÖDER, Viktor, 57128 Livorno (IT); WULF, Andreas, 40549 Düsseldorf (DE); BÜRGER, Frank, 52379 Langerwehe (DE); MALVASI, Alessandro, I-57125 Livorno (IT)
(74) Representative: terpatent Patentanwälte und European Patent Attorneys ter Smitten Eberlein -Van Hoof
(86) International application number: PCT/EP2015/070219
(87) International publication number: WO 2017/036549

(56) References cited:
- EP-A2- 1 146 625
- DE-A1- 4 307 337
- JP-A- 2007 252 039
- US-A- 3 805 134

## Description

The invention is directed to an automotive auxiliary device, for example an electric fluid pump, with a brushless electronically commutated drive motor, the drive motor comprising a motor rotor, a motor stator and at least one hall-sensor for a precise detection of the rotational rotor position.

For a secure and energy-efficient operation of an automotive auxiliary device , which is driven by an electronically commutated drive motor, the precise detection of the rotational rotor position of the motor rotor is of great importance, since only in this way an exact control and regulation of the drive motor can be realized. In particular, on the one hand the precise detection helps to avoid undesired operations, such as start-up problems, e.g. the so-called toggling, or other operational problems which can occur in particular with positive displacement pumps due to greatly varying torques. On the other hand the precise detection facilitates an accurate timing of the commutation in the stator coils so that the absolute energy consumption can be minimized.

Against this background, hall-sensors are commonly used for accurate rotor position detection. The hall-sensors can be arranged axially or radially to the motor rotor which is magnetically excited by permanent magnets. In this way, the hall-sensors detect rotating magnetic fields of the motor rotor generated by the permanent magnets and their magnetic poles respectively.

For the accuracy of the rotor position detection by hall-sensors, the absolute field strength of the magnetic field and the size of interfering signals are crucial.

EP 1 146 625 A2 discloses an electrical machine with a motor rotor comprising a permanent magnet ring axially protruding from the rotor body at one axial rotor end. A stator-sided hall-sensor is arranged within the ring-shaped groove defined by the permanent magnet ring and the static shaft supporting the motor rotor.

US 3,805,134 A discloses an electric motor with an external motor rotor and an internal motor stator.

DE 43 07 337 A1 discloses an electric drive motor with a hall-sensor arranged within a ring-shaped groove defined by the rotating rotor axis, the ferromagnetic rotor body and the permanent magnetic ring.

JP 2007 252039 A discloses a drive motor with a shaft bearing defining a ferromagnetic part of the magnetic hall-sensor.

It is an object of the present invention to provide an automotive electric fluid pump with an electric drive motor, which has a high operational reliability and energy efficiency at low manufacturing costs.

This object is achieved by an automotive electric fluid pump with the features of claim 1.

The inventive automotive auxiliary device, in particular an electric fluid pump comprising a pumping part with an electrically driven impeller provided in a fluid channel, and a motor part with an electric drive motor, comprises especially a brushless and electronically commutated drive motor. The drive motor comprises a motor rotor, a motor stator and at least one hall-sensor detecting the rotational position of the motor rotor. The quantity of the hall-sensors particularly depends on the quantity of the motor phases. The motor rotor comprises a rotatable rotor shaft which defines the longitudinal axis of the pump and which extends at least over the whole length of the motor rotor. In order to drive an impeller or an actuator, the rotor shaft can of course extend from the motor part to a pumping part or actuating part. The motor rotor further comprises a magnet carrier which is fixed to the motor shaft and which carries at least one permanent-magnet, preferably on a radial outside of the magnet carrier. The permanent-magnet can be ring-shaped and has an axial protruding portion which axially protrudes from at least one distal end of the magnet carrier. For this, the permanent-magnet can be but don't have to be made axially longer than the magnet carrier. The permanent-magnet generates at least two rotor poles so that a rotatable magnetic field is provided to the motor rotor. The motor stator is arranged radially around the motor rotor and comprises at least two stator coils. The coils can be energized with electricity controlled by power electronics. Preferably, the power electronics is provided at the distal end of the motor rotor opposite to the pumping part. The power electronics is provided with at least one stator-sided hall-sensor. The hall-sensor is a radial rotor detection sensor detecting radial magnetic fields of the rotor poles and, thus, is arranged radially to the permanent magnet of the motor rotor. In particular, the hall-sensor is arranged at the radial inner side of the permanent magnet, in a free space between the rotatable rotor shaft and the permanent-magnet. This free space and area respectively is preferably located at the radial inner side of the protruding portion of the permanent-magnet which axially protrudes from the distal end of the magnet carrier. This feature leads to an increased sensitivity of the radial rotor position detection by the hall-sensor. As a consequence, misalignments between a rotor magnetic field and a sensor magnetic field as well as influences by the stator magnetic field can be excluded, so that the signals of the hall-sensor can be improved. Furthermore, this arrangement enables a space-saving construction, a high operational reliability and high energy efficiency at low manufacturing costs.

The ferromagnetic part is a separate part fixed to the motor rotor, e.g. to the rotor shaft. The ferromagnetic part being a separate part fixed to the motor rotor the ferromagnetic part can be installed individually depending on a specific pump charge or other individual requirements.

The ferromagnetic part is realized as a rotor-shaft bearing, e.g. a ball-bearing supporting the rotor shaft. This kind of arrangement results in a space-saving construction of the motor.

According to a preferred embodiment of the invention, the hall-sensor is arranged next to a radial inner surface of the permanent-magnet. This feature leads to a radial inner periphery of the permanent-magnet which can be round-shaped coaxially to the rotor axis with an increased total surface. Preferably, this radial inner periphery is at least provided in that part of the permanent-magnet which axially protrude from the distal end of the magnet carrier. As a consequence, the hall-sensor can be arranged very close to the permanent-magnet so that the rotor position detection can be significantly improved.

The hall-sensor can be arranged eccentrically to the rotor axis in a transversal plane. Preferably, this transversal plane is axially located in the section, where the protruding part of the permanent-magnet is arranged. The hall-sensor can be spaced from one another, e.g. in a circumferential angle of approx. 120degree. Thus, the hall-sensor can be mounted facing the radial inner periphery of the permanent-magnet in a relatively simple way. If the drive motor is provided with more than only one hall-sensor, the hall-sensors preferably are arranged concentrically to the rotor axis in the transversal plane. Further, this results in a very accurate detection of the rotor position.

According to a preferred embodiment of the invention, the hall-sensor is provided at an axially distal end of the motor rotor, in particular at an axially distal end of the magnet carrier. This distal end of the motor rotor is preferably arranged oppositely to an actuating part or a pumping part of a pump. In this embodiment, the hall-sensor can be arranged very close to the power electronics so that the manufacturing costs can be reduced.

Preferably, the hall-sensor is fixed to or integrated into a ring-shaped sensor carrier. The sensor carrier can be made of plastic material so that the hall-sensor can be easily fixed to or integrated into the sensor carrier. The sensor carrier itself can be fixed by at least one stator-side bracket or arm. This embodiment results in very low manufacturing costs.

According to a preferred embodiment of the invention, the motor rotor is provided with a ferromagnetic part which is made of ferromagnetic material and which is arranged radially between the rotor axis and the hall-sensor. In particular, the ferromagnetic part is arranged between the rotor shaft and the hall-sensor. As an effect of the ferromagnetic part, the orientation of a magnetic flux generated by the permanent magnet can be orientated, in particular the magnetic flux angle through the hall-sensor can be improved, e.g. being perfectly radial, so that a high detecting performance is enabled.

Preferably, the ferromagnetic part is provided with a radial outer periphery facing the hall-sensor. As a consequence of this arrangement, the magnetic flux angle through the hall-sensor can be substantially radially so that misalignments between a rotor magnetic field and a sensor magnetic field as well as influences by the stator magnetic field can be excluded and the signals of the hall-sensor can be improved.

According to a preferred embodiment of the invention, at least the ferromagnetic part and the permanent-magnet create a circumferential groove or channel, in which the hall-sensor is provided. The channel is one-side axial open, so that the hall-sensor can be one-side inserted in the channel. This embodiment enables a low cost manufacturing and a high detection quality.

According to another preferred embodiment of the invention, the ferromagnetic part, the permanent-magnet and the hall-sensor are arranged such that the magnetic flux through the hall-sensor is substantially radially orientated. In particular the magnetic flux from the permanent-magnet through the hall-sensor into the ferromagnetic part is orientated substantially radially. This feature leads to an increased sensitivity of the radial rotor position detection by the hall-sensor.

According to a preferred embodiment of the invention, the magnet carrier is a rotor stack. This feature results in a space-saving construction of the motor.

According to another preferred embodiment of the invention, the permanent-magnets are fixed to a radial outside of the rotor carrier, e.g. to the rotor stack. This feature also results in a space-saving construction of the motor.

A description of one embodiment of the invention is described with reference to the drawings, wherein
figure 1 schematically shows a perspective view of an automotive auxiliary device with an electric drive motor, and
figure 2 schematically shows a cross section of the automotive auxiliary device, in particular of the electric drive motor of figure 1.

Both figures schematically show an automotive auxiliary device 1 which is presently realized as an electric fluid pump. The fluid pump 1 is configured as a liquid flow pump, for example as a coolant pump or as a fuel pump. The fluid pump 1 can alternatively also be designed and provided as a positive displacement pump, a gerotor pump, a vane pump or another rotating displacement pump for example for pumping a lubricant for lubrication of an internal combustion engine.

The pump 1 is presently provided with three sections, i.e. a pump section 7, a motor section 2 and an electronics section 8.

The pump section 7 is presently provided with a flow channel 70 comprising an axial inlet 71 and a tangential outlet 72, and with a pump rotor 74 comprising a pump rotor shaft 75 and an impeller wheel 73, which is only schematically shown in an outbreak in the figures. In order to drive the pump rotor 74 and the impeller 73 respectively the pump rotor shaft 75 is connected with the motor section and the drive motor 2 respectively.

The motor section 2 is provided with an electric drive motor, which is presently designed as a brushless DC motor and comprises at least a motor rotor 3 and a motor stator 4. In order to control the drive motor the electronics section 8 comprises several electronic parts.

The motor rotor 3 is defined by a rotatable motor rotor body comprising at least a rotor shaft 31, a magnet carrier 32 and several permanent-magnets 33. The motor rotor shaft 31 is rotatably connected with the pump rotor shaft 75 and defines a longitudinal rotor axis 10 of the pump 1. The motor rotor 3 comprises a magnet carrier 32 which is presently fixed to the motor rotor shaft 75 and which carries the permanent-magnets 33 on a radial outside of the magnet carrier 32. The permanent-magnets 33 are longer than the magnet carrier 32 and have an axial protruding portion 33a which axially protrude from a distal end 32a of the magnet carrier 32. Thus, an inner free space 35 is provided between the rotor axis 10 and the permanent-magnets 33, in particular between a rotor bearing 62 and the permanent-magnets 33. The rotor bearing 62 presently defines a ferromagnetic part 6 which is made of ferromagnetic material and, thus, can cause a radial orientation of a magnetic flux from the permanent magnets 33 to the ferromagnetic part 6, i.e. to the rotor bearing 62.

As the drive motor 2 is designed as a brushless DC motor, which is electronically commutated by motor control electronics, the motor rotor 3 is permanently magnetized by the permanent-magnets 33 generating at least two rotor poles. The magnetized motor rotor 3 can be magnetically driven by the motor stator 4 which is defined by a number of motor stator coils 41. The coils 41 are arranged radially around the motor rotor 3 and generating a rotating magnetic field which is followed by the magnetized motor rotor 3. In order to generate the rotating magnetic field, the stator coils 41 can be selectively energized by power electronics such as semiconductors which are provided in the electronics section 8 and which are not shown in detail in the figures. Presently, the power electronics is provided at the distal end of the motor rotor opposite to the pump section 7. In order to control the rotor rotation the electronics section 8 further comprises three hall-sensors 5 detecting the precise rotational position of the motor rotor 3.

The hall-sensors 5 are radial rotor detection sensors detecting radial magnetic fields of the rotor poles and, thus, are arranged radially to the permanent magnets 33 of the motor rotor 3. In particular, the hall-sensors 5 are provided at an axially distal end 32a of the magnet carrier 32, in an area radially between the rotatable rotor bearing 62 and the permanent-magnets 33, i.e. in the above mentioned free space 35. In other words, the protruding portion 33a of the permanent-magnets 33 radially surrounds the hall-sensors 5. This feature leads to an increased sensitivity of the radial rotor position detection by the hall-sensors 5 and to a space-saving construction of the pump 1. The hall-sensors 5 are arranged eccentrically and concentrically to the rotor axis 10 in a transversal plane and are spaced from one another in a circumferential angle of 120degree. The hall-sensors 5 are fixed to a sensor carrier 51 which is realized as a ring-shaped body. The sensor carrier 51 can be fixed via an arm or bracket to the motor stator.

In order to further increase the sensitivity of the radial rotor position detection by the hall-sensors 5, the bearing 62 is - as mentioned above - designed as a ferromagnetic part 6 so that the magnetic flux angle from the permanent magnets 33 through the hall-sensor 5 into the bearing 62 can be substantially radially and misalignments between a rotor magnetic field and a sensor magnetic field as well as influences by the stator magnetic field can be excluded.

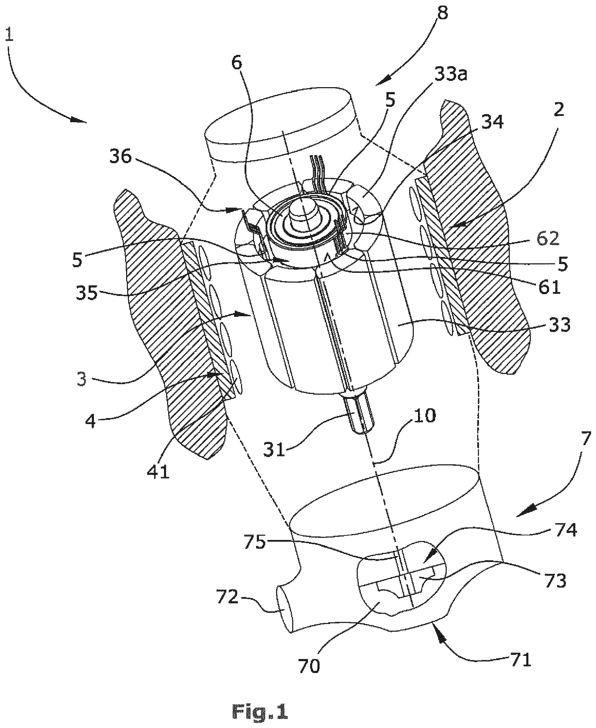

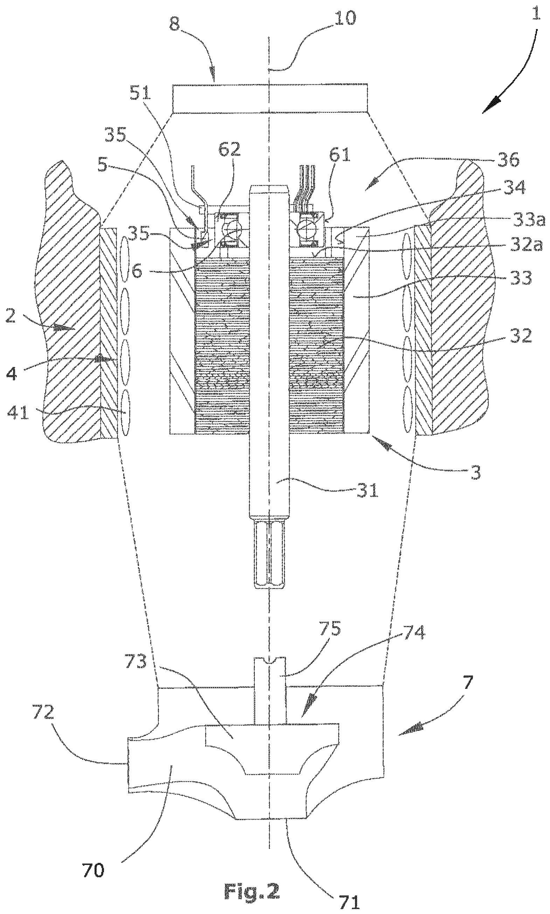

It should be noted that figures 1 and 2 only show an example of an application of the auxiliary device. The auxiliary device can also be realized as a device for other components, such as an engine gas recirculation (EGR), throttle valve, etc.

### References:

- 1: automotive electric fluid pump
- 10: rotor axis
- 2: drive motor
- 3: motor rotor
- 31: motor rotor shaft
- 32: magnet carrier
- 32a: distal end of magnet carrier
- 33: permanent-magnet
- 33a: protruding portion
- 34: radial inner surface of permanent-magnet
- 35: free space, ring-shaped groove
- 36: distal end of motor rotor
- 4: motor stator
- 41: stator coils
- 5: hall-sensor
- 51: sensor carrier
- 6: ferromagnetic part
- 61: radial outer periphery
- 62: bearing
- 7: pump section
- 70: flow channel
- 71: inlet
- 72: outlet
- 73: impeller
- 74: pump rotor
- 75: pump rotor shaft
- 8: electronics section

## Claims

1. Automotive auxiliary device (1) with a brushless and electronically commutated electric drive motor (2), the drive motor (2) comprising:
a rotatable motor rotor (3) defining a longitudinal rotor axis (10) and comprising a rotor shaft (31), a magnet carrier (32) and at least one permanent-magnet (33) which generates at least two rotor poles, wherein the permanent-magnet (33) is fixed to the magnet carrier (32) and has an axial protruding portion (33a) which axially protrudes from at least one side of the magnet carrier (32),
a motor stator (4) comprising at least two stator coils (41) which are arranged radially around the motor rotor (3), and
at least one stator-sided hall-sensor (5) being a type of radial rotor detection sensor and being arranged in a free space (35) between the rotor shaft (31) and the permanent-magnet (33),
wherein the motor rotor (3) is provided with a ferromagnetic part arranged radially between the rotor axis (10) and the hall-sensor (5),
wherein the ferromagnetic part is a rotor-shaft bearing (62), and
wherein the rotor-shaft bearing (62), the permanent magnet (33) and
the hall sensor (5) are arranged such that the magnetic flux between the permanent magnet (33) and the rotor-shaft bearing (62) through the hall sensor (5) is orientated substantially radially.

2. Automotive auxiliary device (1) of claim 1, wherein the hall-sensor (5) is arranged next to a radial inner surface (34) of the permanent-magnet (33).

3. Automotive auxiliary device (1) of one of the preceding claims, wherein the hall-sensor (5) is arranged eccentrically to the rotor axis (10) in a transversal plane.

4. Automotive auxiliary device (1) of one of the preceding claims, wherein the hall-sensor (5) is provided at a distal end (36) of the motor rotor (3).

5. Automotive auxiliary device (1) of one of the preceding claims, wherein the hall-sensor (5) is fixed to a ring-shaped sensor carrier (51).

6. Automotive auxiliary device (1) of one of the preceding claims, wherein the ferromagnetic part is provided with a radial outer periphery (61) facing the hall-sensor (5).

7. Automotive auxiliary device (1) of one of the preceding claims, wherein at least the ferromagnetic part and the permanent-magnet (33) create a one-side axial open, ring-shaped groove or channel (35), in which the hall-sensor (5) is provided.

8. Automotive auxiliary device (1) of one of the preceding claims, wherein the ferromagnetic part, the permanent-magnet (33) and the hall-sensor (5) are arranged such that a magnetic flux through the hall-sensor (5) is orientated substantially radially.

9. Automotive auxiliary device (1) of one of the preceding claims, wherein the magnet carrier (32) is a rotor stack.

10. Automotive auxiliary device (1) of one of the preceding claims, wherein the permanent-magnet (33) is fixed to a radial outside of the magnet carrier (32).

## Patentansprüche

1. Kraftfahrzeug-Hilfsaggregat (1) mit einem bürstenlosen und elektronisch kommutierten elektrischen Antriebsmotor (2), wobei der Antriebsmotor (2) aufweist:
einen drehbaren Motorrotor (3), der eine Motorlängsachse (10) definiert und eine Rotorwelle (31) aufweist, ein Magnethaltemittel (32) und mindestens einen Permanentmagneten (33), der mindestens zwei Rotorpole generiert, wobei der Permanentmagnet (33) an dem Magnethaltemittel (32) befestigt ist und einen axial abstehenden Abschnitt (33a) aufweist, der von mindestens einer Seite des Magnethaltemittels (32) axial absteht,
einen Motorstator (4), der mindestens zwei Statorspulen (41) aufweist, die radial um den Motorrotor (3) angeordnet sind, und
mindestens einen statorseitigen Hallsensor (5), der ein radialer Rotordetektionssensor ist und in einem Freiraum (35) zwischen der Rotorwelle (31) und dem Permanentmagneten (33) angeordnet ist,
wobei der Motorrotor (3) einen ferromagnetischen Teil aufweist, der radial zwischen der Rotorachse (10) und dem Hallsensor (5) angeordnet ist,
wobei der ferromagnetische Teil ein Rotorwellenlager (62) ist, und
wobei das Rotorwellenlager (62), der Permanentmagnet (33) und der Hallsensor (5) so angeordnet sind, dass der Magnetfluss zwischen dem Permanentmagneten (33) und dem Rotorwellenlager (62) durch den Hallsensor (5) hindurch im Wesentlichen radial ausgerichtet ist.

2. Kraftfahrzeug-Hilfsaggregat (1) nach Anspruch 1, wobei der Hallsensor (5) neben einer radialen Innenfläche (34) des Dauermagneten (33) angeordnet ist.

3. Kraftfahrzeug-Hilfsaggregat (1) nach einem der vorangehenden Ansprüche, wobei der Hallsensor (5) exzentrisch zur Rotorachse (10) in einer Querebene angeordnet ist.

4. Kraftfahrzeug-Hilfsaggregat (1) nach einem der vorangehenden Ansprüche, wobei der Hallsensor (5) an einem distalen Ende (36) des Motorrotors (3) vorgesehen ist.

5. Kraftfahrzeug-Hilfsaggregat (1) nach einem der vorangehenden Ansprüche, wobei der Hallsensor (5) an einem ringförmigen Sensor-Trägermittel (51) befestigt ist.

6. Kraftfahrzeug-Hilfsaggregat (1) nach einem der vorangehenden Ansprüche, wobei das ferromagnetische Teil einen radialen Außenumfang (61) aufweist, der dem Hallsensor (5) zugewandt ist.

7. Kraftfahrzeug-Hilfsaggregat (1) nach einem der vorangehenden Ansprüche, wobei zumindest das ferromagnetische Teil und der Permanentmagnet (33) eine einseitig axial offene, ringförmige Nut oder Rinne (35) aufweisen, in der der Hallsensor (5) angeordnet ist.

8. Kraftfahrzeug-Hilfsaggregat (1) nach einem der vorangehenden Ansprüche, wobei der ferromagnetische Teil, der Permanentmagnet (33) und der Hall-Sensor (5) so angeordnet sind, dass ein Magnetfluss durch den Hall-Sensor (5) im Wesentlichen radial ausgerichtet ist.

9. Kraftfahrzeug-Hilfsaggregat (1) nach einem der vorangehenden Ansprüche, wobei das Magnet-Haltemittel (32) ein Rotorpaket ist.

10. Kraftfahrzeug-Hilfsaggregat (1) nach einem der vorangehenden Ansprüche, wobei der Permanentmagnet (33) an einer radialen Außenseite des Magnet-Haltemittels (32) befestigt ist.

## Revendications

1. Appareil auxiliaire automobile (1) avec un moteur d'entraînement électrique (2) sans balais et à commutation électronique, le moteur d'entraînement (2) comprenant :
un rotor rotatif de moteur (3) définissant un axe longitudinal de rotor (10) et comprenant un arbre de rotor (31), un support d'aimant (32) et au moins un aimant permanent (33) qui génère au moins deux pôles de rotor, dans lequel l'aimant permanent (33) est fixé au support d'aimant (32) et a une partie saillante axiale (33a) qui fait saillie axialement d'au moins un côté du support d'aimant (32),
un stator de moteur (4) comprenant au moins deux bobines de stator (41) qui sont arrangées radialement autour du rotor de moteur (3), et
au moins un capteur à effet Hall (5) du côté du stator qui est un type de senseur de détection du rotor radial et qui est arrangé dans un espace libre (35) entre l'arbre du rotor (31) et l'aimant permanent (33),
dans lequel le rotor du moteur (3) est fourni avec une partie ferromagnétique disposée radialement entre l'axe du rotor (10) et le senseur à effet Hall (5),
dans lequel la partie ferromagnétique est un palier rotor-arbre (62), et
dans lequel le palier rotor-arbre (62), l'aimant permanent (33) et le capteur à effet Hall (5) sont arrangés de telle sorte que le flux magnétique entre l'aimant permanent (33) et le palier rotor-arbre (62) à travers le capteur à effet Hall (5) est orienté substantiellement radialement.

2. Appareil auxiliaire automobile (1) de la revendication 1, dans lequel le senseur à effet Hall (5) est arrangé à côté d'une surface intérieure radiale (34) de l'aimant permanent (33).

3. Appareil auxiliaire automobile (1) de l'une des revendications précédentes, dans lequel le capteur à effet Hall (5) est disposé excentriquement par rapport à l'axe du rotor (10) dans un plan transversal.

4. Appareil auxiliaire automobile (1) de l'une des revendications précédentes, selon lequel le capteur hall (5) est fourni à une extrémité distale (36) du rotor de moteur (3).

5. Appareil auxiliaire automobile (1) de l'une des revendications précédentes, dans lequel le capteur à effet Hall (5) est fixé sur un support de senseur annulaire (51).

6. Appareil auxiliaire automobile (1) de l'une des revendications précédentes, selon lequel la partie ferromagnétique est pourvue d'une périphérie extérieure radiale (61) orientée vers le capteur à effet Hall (5).

7. Appareil auxiliaire automobile (1) de l'une des revendications précédentes, dans lequel au moins la partie ferromagnétique et l'aimant permanent (33) créent une rainure ou un canal axial ouvert d'un côté, en forme d'anneau (35), dans lequel le capteur à effet Hall (5) est fourni.

8. Dispositif auxiliaire automobile (1) de l'une des revendications précédentes, dans lequel la partie ferromagnétique, l'aimant permanent (33) et le capteur à effet Hall (5) sont disposés de telle sorte qu'un flux magnétique traversant le capteur à effet Hall (5) est orienté substantiellement radialement.

9. Appareil auxiliaire automobile (1) de l'une des revendications précédentes, dans lequel le support d'aimant (32) est une pile de rotor.

10. Appareil auxiliaire automobile (1) de l'une des revendications précédentes, dans lequel l'aimant permanent (33) est fixé à un extérieur radial du support d'aimant (32).
